# EUROPÄISCHE PATENTSCHRIFT

(11) **EP 3 301 313 B1**
(45) Veröffentlichungstag und Bekanntmachung des Hinweises auf die Patenterteilung: **26.08.2020**
(21) Anmeldenummer: 17192913.6
(22) Anmeldetag: 25.09.2017
(51) Int. Cl.: F16B 13/14

(54) **KLEBEANKER**
ADHESIVE ANCHOR
ANCRE ADHÉSIF

(30) Priorität: 29.09.2016 AT 508792016
(43) Veröffentlichungstag der Anmeldung: 04.04.2018
(73) Patentinhaber: EFCO Befestigungstechnik AG, 8606 Nänikon (CH)
(72) Erfinder: ZENHÄUSERN, Yvo, 3700 Spiez (CH); DOPPELBAUER, Thomas, 6800 Feldkirch (AT)
(74) Vertreter: Torggler & Hofinger Patentanwälte

(56) Entgegenhaltungen:
- DE-A1- 2 556 493
- DE-U1- 29 820 560

## Beschreibung

Die Erfindung einen Klebeanker mit den Merkmalen des Oberbegriffs des Anspruchs 1 und ein Verfahren zum Verankern eines Bauteils in einer Bohrung mit den Merkmalen des Anspruchs 9.

Gattungsgemäße Klebeanker werden dazu verwendet, Bauteile (z. B. in Form von Gewindestangen oder Hülsen) in Bohrungen zu verankern. Zu diesem Zweck weisen die Klebeanker ein Verbindungsmittel zum Verbinden des Bauteils mit dem Klebeanker auf. Ein gattungsgemäßes Verfahren wird so durchgeführt, dass zunächst flüssige oder pastöse Klebemasse (z. B. ein Zwei-Komponenten-Klebstoff oder Mörtel) in ausreichender Menge in die Bohrung eingefüllt wird und anschließend der Klebeanker in die Bohrung eingeführt und damit in die Klebemasse eingepresst wird. Nach Verfestigen der Klebemasse kann das Bauteil über das Verbindungsmittel in der Bohrung verankert werden.

Bei einem solchen Verfahren ist nicht sichergestellt, dass sich Klebemasse bei einer vorbestimmten axialen Position der Bohrung befindet. Z. B. kann es vorkommen, dass sich im Bereich eines Kopfes des Klebeankers keine oder zu wenig Klebemasse befindet, was - ohne dass dies bemerkt wird - zu einer unzureichenden Verankerung des Bauteils in der Bohrung führt. Ein Grund dafür kann sein, dass die Bohrung in Bezug auf den eingesetzten Klebeanker zu tief ist und es der Monteur verabsäumt, eine angepasste Menge an Klebemasse in die Bohrung einzubringen. Ein weiterer Grund kann sein, dass es der Monteur verabsäumt, den Klebeanker beim Eindrücken in die Klebemasse ausreichend zu drehen, um zu erreichen, dass die Klebemasse den Grundkörper ausreichend benetzt. Im Nachhinein ist nicht erkennbar, ob der Monteur den Klebeanker ausreichend verdreht hat, sodass weder Sicherheit über die ausreichende Festigkeit der Verbindung des Klebeankers mit der Öffnung noch eine Reproduzierbarkeit des Verfahrens gegeben ist.

Da der Monteur zur Sicherstellung einer ausreichenden Verklebung meist mehr Klebemasse als nötig in die Bohrung einbringt, wird beim Eindrücken des Klebeankers in die Klebemasse die überflüssige Menge an Klebemasse aus der Bohrung herausgedrückt und führt so zu Verunreinigungen im Bereich der die Bohrung umgebenden Oberfläche. Ein weiterer Nachteil besteht darin, dass die Einbringung von Klebemasse in die Bohrung nicht reproduzierbar und damit mehr oder weniger zufällig erfolgt, da die Klebemasse mit einem Injektor zunächst im Bereich des Bohrgrundes eingebracht wird und anschließend der Injektor unter fortgesetzter Ausbringung von Klebemasse aus der Bohrung heraus gezogen wird. Hierbei kann es (z. B. bei zu raschem Herausziehen oder durch das Anhaften von Klebemasse am Injektor) zur Bildung von Hohlräumen in der Klebemasse kommen, was die Festigkeit der Verbindung zwischen Klebeanker, Klebemasse und Bohrlochwand negativ beeinflusst.

DE 298 20 560 U1 zeigt einen Klebeanker mit einem als Hülse ausgebildeten Grundkörper und einem Verbindungsmittel in Form eines Innengewindes. Am Grundkörper ist eine Einbringöffnung angeordnet, über welche eine Klebemasse mit Hilfe eines in die Einbringöffnung eingeführten Injektors einbringbar ist. Der Grundkörper weist eine mit der Einbringöffnung kommunizierende Austrittsöffnung auf, welche den Austritt von in die oder über die Einbringöffnung eingebrachter Klebemasse aus dem Grundkörper in eine den Klebeanker umgebende Bohrung gestattet.

Ein Klebeanker mit den Merkmalen des Oberbegriffs des Anspruchs 1 geht aus DE 25 56 493 A1 hervor.

Aufgabe der Erfindung ist die Bereitstellung eines gattungsgemäßen Klebeankers und eines gattungsgemäßen Verfahrens, bei welchen die oben diskutierten Probleme vermieden werden.

Diese Aufgabe wird durch einen Klebeanker mit den Merkmalen des Anspruchs 1 und ein Verfahren mit den Merkmalen des Anspruchs 9 gelöst. Vorteilhafte Ausführungsformen der Erfindung sind in den abhängigen Ansprüchen definiert.

Es ist also vorgesehen, dass der Klebeanker am oder im Grundkörper wenigstens einen zweiten Kanal für Klebemasse aufweist, welcher sich ausgehend von der vorbestimmten axialen Position des Grundkörpers bis zu einem dem Kopf des Klebeankers entgegengesetzten Ende erstreckt und über welchen Klebemasse ausgehend von der vorbestimmten axialen Position bis zu dem dem Kopf des Klebeankers entgegengesetzten Ende ausbringbar ist, wobei vorzugsweise vorgesehen ist, dass sich der wenigstens eine zweite Kanal an wenigstens einen ersten Kanal anschließt.

Dadurch ist einerseits sichergestellt, dass Klebemasse zu einer vorbestimmten axialen Position in der Bohrung gebracht wird. Diese vorbestimmte axiale Position wird vorteilhafterweise benachbart zum Kopf des Klebeankers angeordnet sein, um eine unnötig lange Ausbildung des Grundkörpers zu vermeiden. Andererseits wird sichergestellt, dass eine ausreichende Klebewirkung der Klebemasse an einer gewünschten Position der Bohrung vorliegt. Üblicherweise wird sich diese gewünschte Position möglichst tief in der Bohrung befinden, da sich dann eine optimale Verankerung ergibt.

Bei einem erfindungsgemäßen Verfahren ist vorgesehen, dass zunächst ein Einsetzen eines erfindungsgemäßen Klebeankers in einer Einsetzrichtung in die Bohrung (welche zu diesem Zeitpunkt bevorzugt noch frei von Klebemasse ist, jedenfalls soll allenfalls so wenig Klebemasse in der Bohrung sein, dass der Klebeanker beim Einbringen in die Bohrung nicht in die Klebemasse eingedrückt wird) erfolgt und anschließend ein Einbringen von Klebemasse in den zwischen der Bohrung und dem Grundkörper verbleibenden Spaltraum erfolgt.

Bevorzugt ist vorgesehen, dass der wenigstens eine zweite Kanal zumindest abschnittsweise als an einer Mantelfläche des Grundkörpers verlaufende Nut ausgebildet ist bzw. sind.

Besonders bevorzugt ist vorgesehen, dass der wenigstens eine zweite Kanal zumindest abschnittsweise wendelförmig in axialer Richtung entlang des Grundkörpers verlaufen, wobei vorzugsweise vorgesehen ist, dass sich die Steigung des Kanals bzw. der Kanäle in axialer Richtung des Grundkörpers verändert.

Durch eine Ausbildung des wenigstens einen zweiten Kanals als zumindest abschnittsweise wendelförmige, an einer Mantelfläche des Grundkörpers verlaufende Nut, wird ein Klebemörtelfluss entlang dieser wendelförmigen Nut definiert rund um den Grundkörper geführt. Dadurch ist sichergestellt, dass der Klebeanker entlang seiner gesamten Mantelfläche gleichmäßig mit einer Wandung der Bohrung verklebt ist und Lasten somit gleichmäßig auf die Wandung der Bohrung übertragen werden. Dies hat eine stabilere Verankerung des Klebeankers in der Bohrung zur Folge.

Es ist vorgesehen, dass am oder im Grundkörper wenigstens eine Einbringöffnung angeordnet ist, über welche eine Klebemasse mit Hilfe eines in die Einbringöffnung eingeführten Injektors einbringbar ist und dass der Grundkörper zumindest eine mit der wenigstens einen Einbringöffnung kommunizierende Austrittsöffnung aufweist, welche den Austritt von in die oder über die Einbringöffnung eingebrachter Klebemasse aus dem Grundkörper in eine den Klebeanker umgebende Bohrung gestattet.

Bevorzugt ist vorgesehen, dass der Klebeanker wenigstens eine am Grundkörper angeordnete Dichtung aufweist, welche bei einem in eine Bohrung eingesetzten Klebeanker zumindest den zwischen dem Grundkörper und einer Wandung der Bohrung verbleibenden Spaltraum axial verschließt und so den Durchtritt von Klebemasse zumindest im Wesentlichen verhindert. Zu beachten ist, dass durchaus ein gewisser Dichtspalt zwischen der Dichtung und der Wandung der Bohrung verbleiben kann, vorausgesetzt dieser ist gering genug um einen hinreichend großen Widerstand gegen ein Durchströmen zu bilden, sodass in den Spaltraum eingebrachte Klebemasse von der Dichtung weg in die vorgesehene Richtung umgelenkt wird.

Weil das mit Klebemasse zu füllende Volumen bekannt ist, kennt man auch die benötigte Menge an Klebemasse, weshalb das Verfahren auf reproduzierbare Weise durchführbar ist. Bei einem Bauprojekt kann die insgesamt benötigte Menge an Klebemasse ziemlich genau voraus berechnet werden. Die auftretenden Verluste sind viel geringer als beim Stand der Technik. Ein - nicht reproduzierbares - Drehen des Klebeankers ist nicht erforderlich.

Beispielsweise kann die Dichtung in Form eines radial um den Grundkörper herum laufenden Vorsprungs ausgebildet sein. Die Dichtung könnte z. B. auch als auf einen Kopf des Klebeankers aufschraubbares Teil ausgebildet sein. Die Dichtung kann zumindest so elastisch oder nachgiebig ausgebildet sein, dass eine Anpassung an Bohrungen mit unterschiedlichen Durchmessern möglich ist.

Es kann vorgesehen sein, dass der Klebeanker einen Presssitz zum axialen Positionieren des Klebeankers in der Bohrung aufweist, wobei vorzugsweise vorgesehen ist, dass die Dichtung als Presssitz fungiert. Durch den Presssitz kann auch ein Zentrieren des Klebeankers in der Bohrung erfolgen.

Der Presssitz kann entweder nur so stark ausgebildet sein, dass ein Hineinrutschen des Klebeankers in die Bohrung vor dem Verfestigen der Klebemasse verhindert wird, oder er kann so stark ausgebildet sein, dass ein Verschieben des Klebeankers durch die beim Einbringen der Klebemasse entstehenden Injektionskräfte verhindert wird.

Die Klebemasse kann flüssig oder pastös ausgebildet sein. Z. B. kann es sich um einen Zwei-Komponenten-Klebstoff oder Mörtel handeln.

Der Klebanker kann z. B. aus Kunststoff oder Metall oder Kombinationen daraus bestehen.

Ausführungsbeispiele der Erfindung werden anhand der Figuren diskutiert. Es zeigen:
- Fig. 1a-1e: zwei Ausführungsbeispiele der Erfindung mit einem hülsenförmigen Grundkörper in verschiedenen Ansichten
- Fig. 2a-2b: ein Ausführungsbeispiel (nicht Teil der Erfindung) mit einem hülsenförmigen Grundkörper
- Fig. 3a-3d: ein Ausführungsbeispiel (nicht Teil der Erfindung) mit einem hülsenförmigen Grundkörper
- Fig. 4a-4c: ein weiteres Ausführungsbeispiel (nicht Teil der Erfindung) mit einem stangenförmigen Grundkörper in verschiedenen Ansichten
- Fig. 5: ein weiteres Ausführungsbeispiel der Erfindung mit einem hülsenförmigen Grundkörper und einer Dichtung in Form einer sackartigen Folie
- Fig. 6a-6c: Detaildarstellungen zu möglichen Ausbildungen der Dichtung.

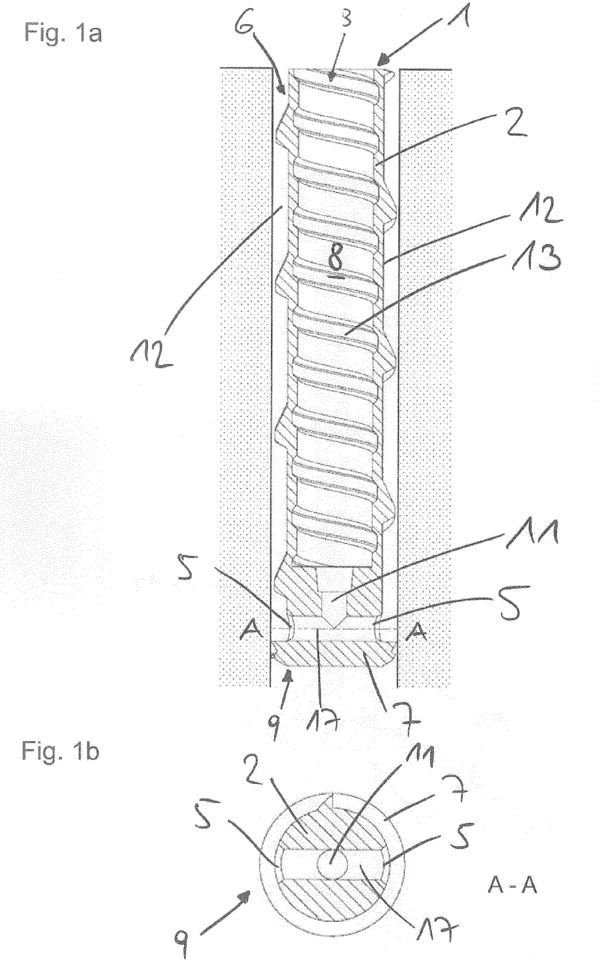

Fig. 1a zeigt ein Ausführungsbeispiel eines erfindungsgemäßen Klebeankers 1 mit einem im Wesentlichen zylindrisch ausgebildeten, in Richtung der Längsachse axial erstreckten Grundkörper 2 in einem Querschnitt durch eine die Längsachse des Grundkörpers 2 aufweisende, zentrale Ebene. Der Klebeanker 1 ist in eine Bohrung 6 eines (hier als Betonfläche ausgebildeten) Untergrunds eingesetzt. Die Einsetzrichtung stimmt mit der Erstreckungsrichtung der Bohrung 6 überein. Das Einsetzen des Klebeankers 1 in die Bohrung 6 erfolgt nach dem erfindungsgemäßen Verfahren noch vor dem Einbringen von Klebemasse 4 in die Bohrung 6.

Der Grundkörper 2 des Klebeankers 1 ist als Hülse ausgebildet und mit einem Innengewinde 13 (dieses stellt das Verbindungsmittel zum Verbinden eines Bauteiles mit dem Klebeanker 1 dar) versehen. Der Grundkörper 2 erstreckt sich zwischen einem Kopf 9 des Klebeankers 1 und einem dem Kopf 9 entgegengesetzten Ende des Klebeankers 1. In diesem Ausführungsbeispiel entspricht der erste Kanal 8 der Kernlochbohrung des Innengewindes 13.

Der Klebeanker 1 weist eine hier als radial umlaufender Vorsprung ausgebildete und im Bereich des Kopfes 9 angeordnete Dichtung 7 auf, welche den zwischen dem Grundkörper 2 und der Wandung der Bohrung 6 verbleibenden Spaltraum in Einsetzrichtung axial verschließt und so die Passage von Klebemasse 4 um den Kopf 9 herum zumindest im Wesentlichen verhindert.

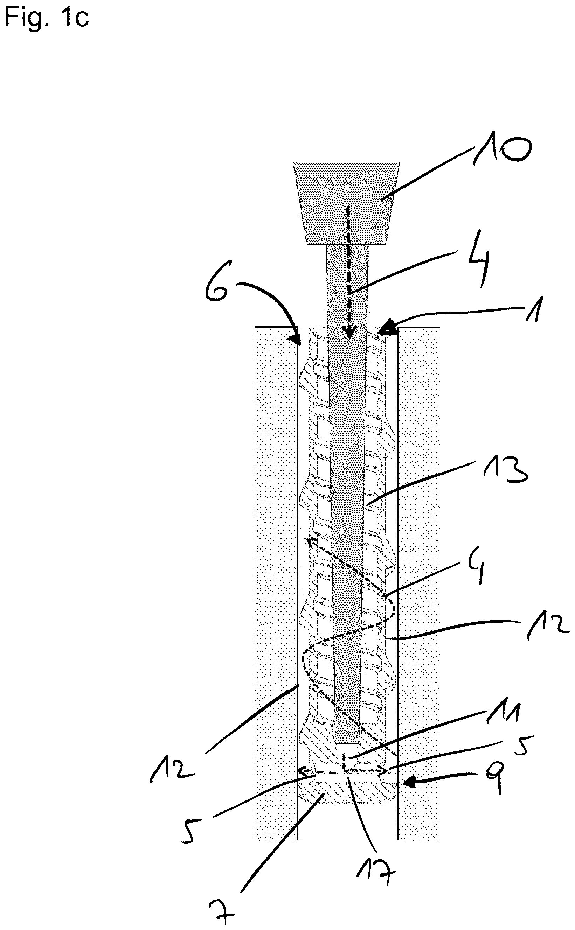

Im Grundkörper 2 ist eine hier zentral angeordnete Einbringöffnung 3 für Klebemasse angeordnet, in welche die Klebemasse 4 mit Hilfe eines in die Einbringöffnung 3 eingeführten Injektors 10 eingebracht werden kann (vgl. Fig. 1c).

Der Grundkörper 2 weist hier zwei mit der Einbringöffnung 3 über einen Verbindungskanal 11 und quer zur axialen Erstreckung verlaufenden Kanal 17 kommunizierende Austrittsöffnungen 5 auf (vgl. Fig. 1b), welche den Austritt von Klebemasse 4 aus dem Grundkörper 2 in die den Klebeanker 1 umgebende Bohrung 6 gestatten.

Weil sich aufgrund der Dichtung 7 für über die Austrittsöffnungen 5 austretende Klebemasse 4 ein Strömungspfad mit geringem Widerstand nur in eine Richtung ergibt, nämlich in die vom Kopf 9 des Klebeankers 1 wegweisende Richtung (also entgegen der Einsetzrichtung), strömt die ausgetretene Klebemasse 4 vom Kopf 9 weg (vgl. Fig. 1c) und erreicht schließlich die Öffnung der Bohrung 6. Das Einbringen von Klebemasse 4 kann dann gestoppt werden. Es ist eine definierte Menge an Klebemasse 4 in die Bohrung 6 eingebracht worden und man hat die Gewissheit, dass der axial in Einsetzrichtung durch die Dichtung 7 begrenzte, zwischen der Bohrung 6 und dem Grundkörper 2 verbleibende Spaltraum vollständig mit Klebemasse 4 gefüllt ist.

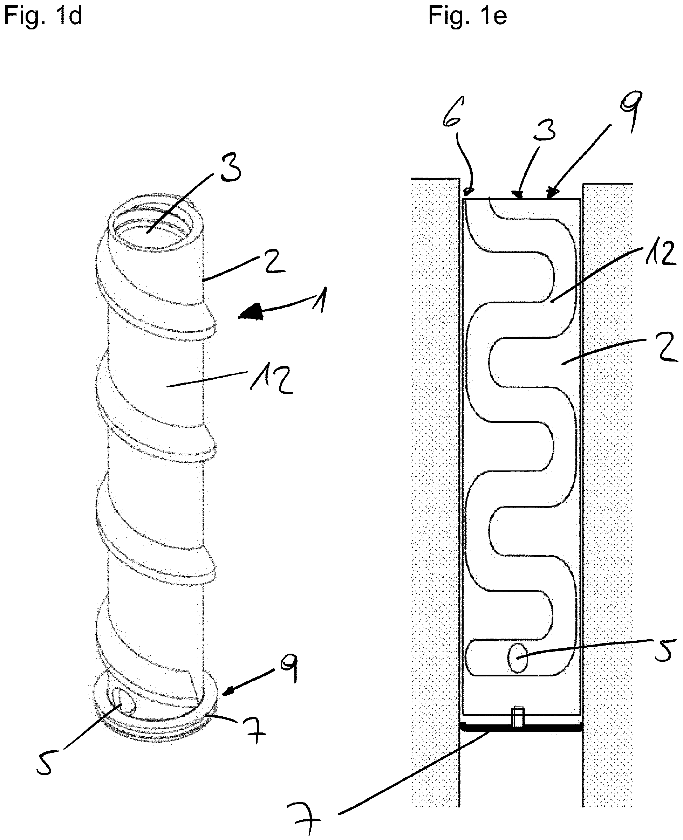

Fig. 1d zeigt eine isometrische Ansicht des diskutierten Ausführungsbeispiels.

Beim Ausführungsbeispiel der Fig. 1a-1d sind die Austrittsöffnungen 5 mit einem entlang der Mantelfläche des Grundkörpers 2 helikal verlaufenden, in Form einer Nut ausgebildeten zweiten Kanal 12 verbunden.

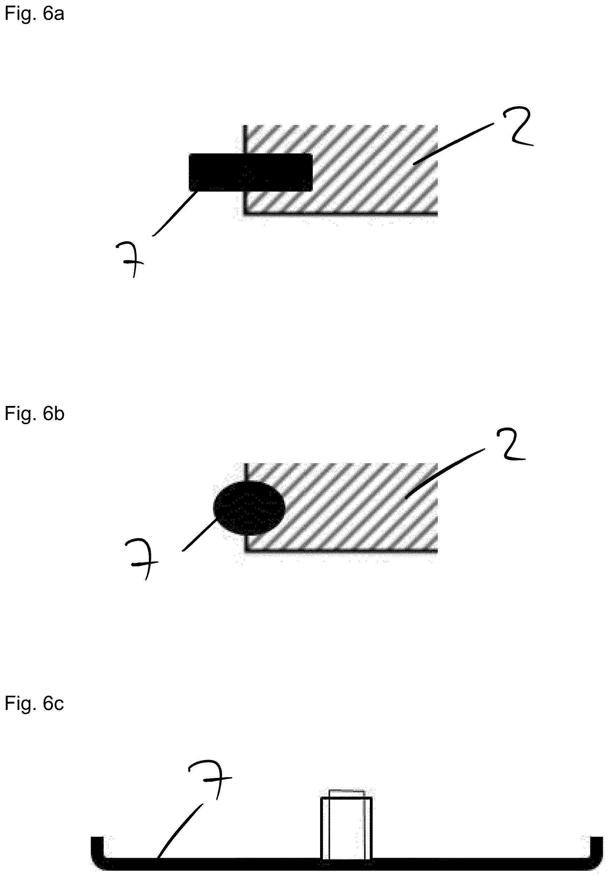

Anders als dargestellt, könnte die Dichtung 7 z. B. auch als auf den Kopf 9 des Klebeankers 1 aufschraubbares Teil ausgebildet sein (vgl. Fig. 1e und 6c).

Im Ausführungsbeispiel der Fig. 1e sind zwei zweite Kanäle 12 an einander entgegengesetzten Seiten des Grundkörpers 2 vorgesehen, die jeweils mit einer der zwei Austrittsöffnungen 5 verbunden sind und mäandernd entlang der Mantelfläche des Grundkörpers 2 axial verlaufen. Anders als dargestellt, könnte die Dichtung 7 hier so wie in den Fig. 1a-1d gezeigt ausgebildet sein.

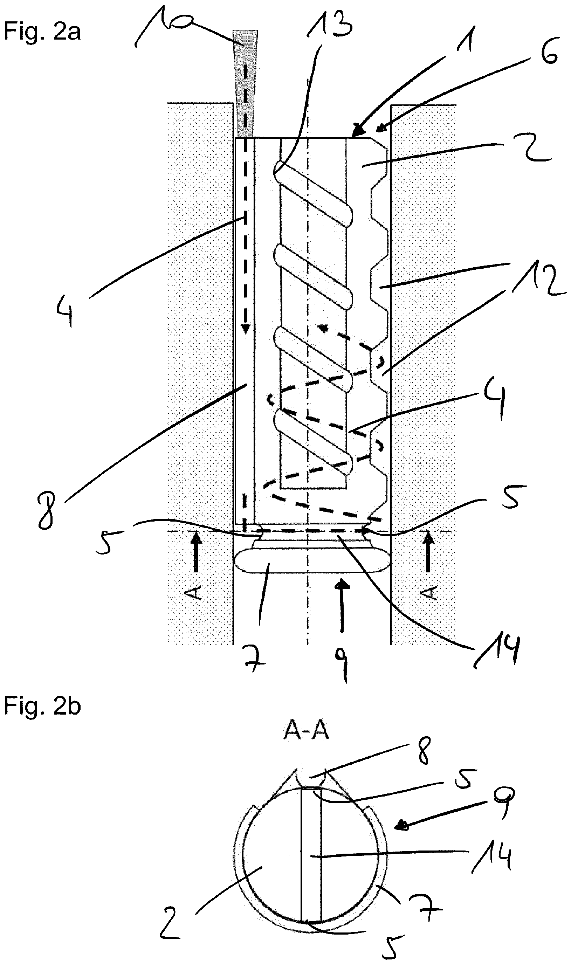

Fig. 2a zeigt ein Ausführungsbeispiel eines nicht-erfindungsgemäßen Klebeankers 1 in einem Querschnitt durch eine die Längsachse des im Wesentlichen zylindrisch ausgebildeten Grundkörpers 2 aufweisende, zentrale Ebene.

Der Klebeanker 1 weist in diesem Ausführungsbeispiel einen als mit einem Innengewinde 13 (dieses stellt das Verbindungsmittel zum Verbinden eines Bauteiles mit dem Klebeanker 1 dar) versehenen und als Hülse ausgebildeten Grundkörper 2 auf, welcher sich zwischen einem Kopf 9 des Klebeankers 1 und einem dem Kopf 9 entgegengesetzten Ende des Klebeankers 1 erstreckt.

Im Unterschied zum Ausführungsbeispiel der Fig. 1 ist hier keine Einbringöffnung 3 vorgesehen, sondern Klebemasse 4 kann mittels eines Injektors 10 seitlich am Klebeanker 1 im Bereich der Öffnung der Bohrung 6 in einen ersten Kanal 8 eingebracht werden und fließt entlang des ersten Kanals 8 in Einsetzrichtung bis zum Kopf 9 des Klebeankers 1. Dort mündet der erste Kanal 8 über ein quer zur axialen Richtung des Grundkörpers 2 verlaufendes Kanalsegment 14 in einen zweiten Kanal 12 ein, über welchen die Klebemasse 4 vom Kopf 9 des Klebeankers 1 entgegen der Einsetzrichtung zurück zur Öffnung der Bohrung 6 strömen kann. Der erste Kanal 8 ist hier in Form einer zwischen zwei axial verlaufenden Vorsprüngen gerade verlaufenden Nut ausgebildet. Der zweite Kanal 12 ist an der gegenüberliegenden Seite des Grundkörpers 2 angeordnet und mäandernd ausgebildet.

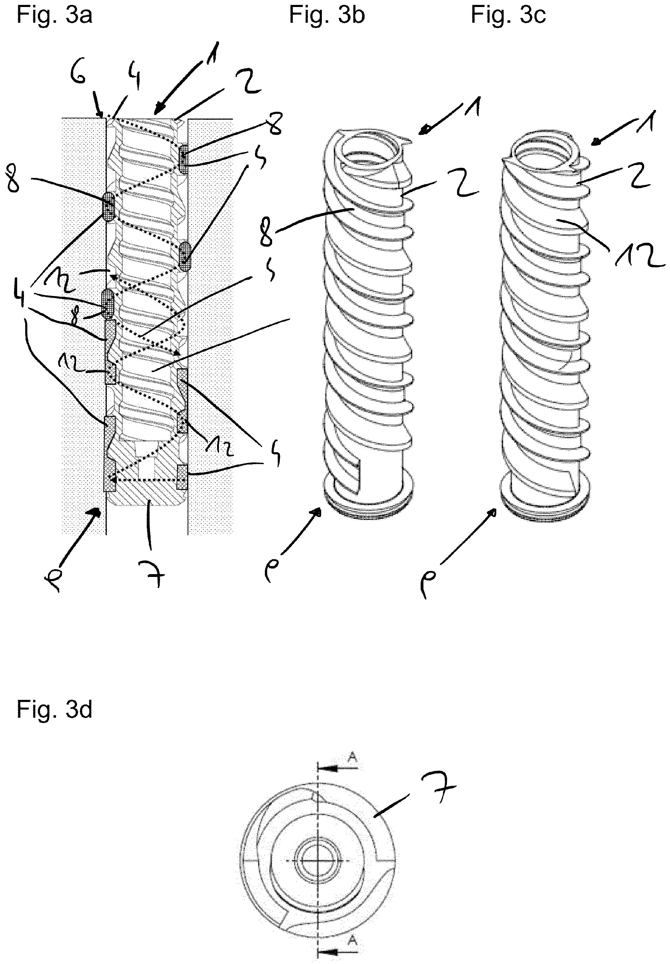

Natürlich wäre auch eine Ausbildung des ersten und zweiten Kanals 8, 12 in Form einer zwei- oder mehrgängigen Helix möglich, wobei sich der erste und zweite Kanal 8, 12 nicht schneiden (vgl. Fig. 3a-3d). Die Fig. 3b und 3d zeigen isometrische Ansichten der einander gegenüberliegenden Seiten des Grundkörpers 2. Dann kann bevorzugt vorgesehen sein, dass sich die Steigung des Kanals 8, 12 bzw. der Kanäle 8, 12 in axialer Richtung des Grundkörpers 2 verändert. Eine solche veränderliche Steigung hat den Vorteil, dass ein Herausdrehen des Klebankers 1 nach dem Verfestigen der Klebemasse 4 nicht möglich ist.

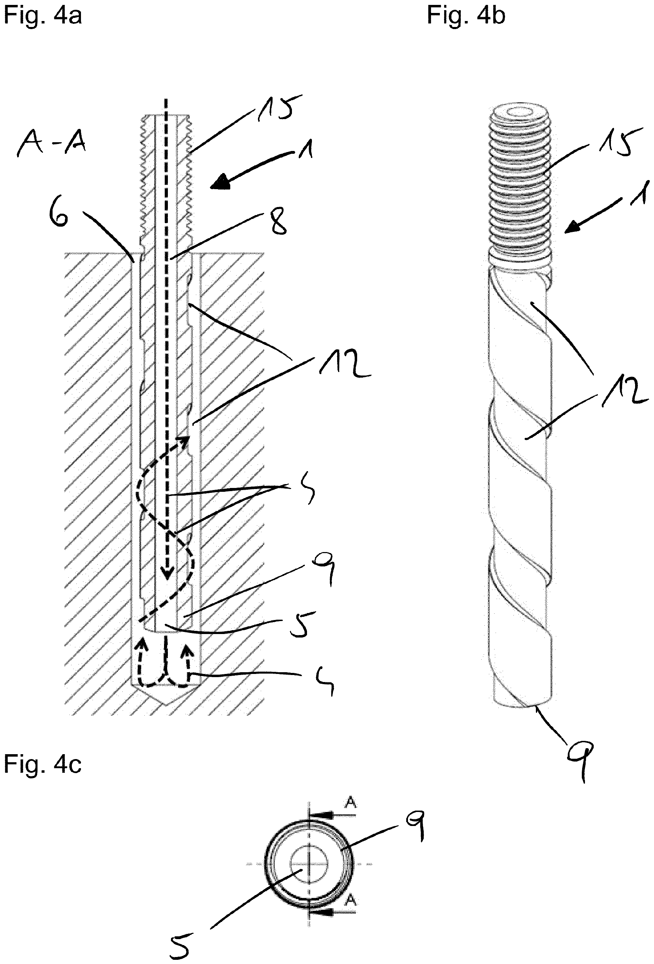

Das Ausführungsbeispiel der Fig. 4 weist einen stangenförmigen Grundkörper 2 auf, wobei das Verbindungsmittel als Außengewinde 15 ausgebildet ist. Die Ansicht der Fig. 4a zeigt den erfindungsgemäßen Klebeanker 1 in einem Querschnitt durch eine die Längsachse des im Wesentlichen zylindrisch ausgebildeten Grundkörpers 2 aufweisende, zentrale Ebene (vgl. Linie A - A in Fig. 4c).

Klebemasse 4 ist über einen im Grundkörper 2 verlaufenden und zentral angeordneten ersten Kanal 8 in den Bereich des Kopfes 9 des Klebeankers 1 bringbar. Dort mündet der erste Kanal 8 in eine Austrittsöffnung 5 ein. Über einen vor dem Kopf 9 angeordneten Hohlraum kann ausgetretene Klebemasse 4 in den helikal am Grundkörper 2 verlaufenden zweiten Kanal 12 eintreten und bis in den Bereich der Öffnung der Bohrung 6 fließen. Eine Dichtung 7 ist hier nicht vorgesehen. Natürlich wäre aber auch bei diesem Ausführungsbeispiel das Vorsehen einer Dichtung 7 möglich.

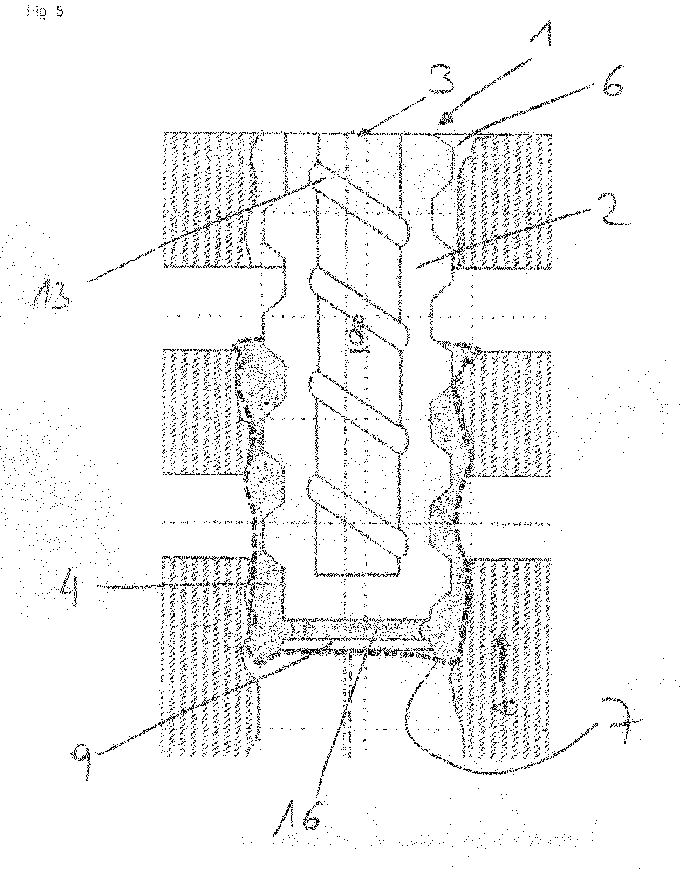

Fig. 5 zeigt ein weiteres Ausführungsbeispiel der Erfindung mit einem hülsenförmigen Grundkörper 2 und einer Dichtung 7 in Form einer sackartigen Folie. Bei Ziegeluntergründen kann so verhindert werden, dass die Klebemasse 4 durch Hohlräume einfach wegläuft. Die Permeabilität der Folie ist bevorzugt auf die Art der Klebemasse 4 abgestimmt, dass nur soviel Klebemasse durch die Folie nach außen dringt, wie zur Verklebung mit der Bohrlochwand notwendig ist. Die Folie verhindert, dass sich die Klebemasse 4 in Hohlräumen beispielsweise bei Hohlziegeln unkontrolliert verläuft.

Die Folie kann im geometrischen Verlauf über unterschiedliche Permeabilitäten verfügen. So ist es vorteilhaft im unmittelbaren Bereich des Kopfes 9 axial undurchlässig zu gestalten.

Alternativ zu Folien sind Draht-, Kunststoffgitter oder Gewebe aus geeigneten Materialen einsetzbar

Hier ist die Folie am Kopf 9 des Klebeankers 1 befestigt, z. B. verklebt. Die Folie könnte auch nur einen Teil der Bohrung 6 ausfüllen.

Die Fig. 6a-6c zeigen Detaildarstellungen zu möglichen Ausbildungen der Dichtung 7. In den Fig. 6a und 6b ist die Dichtung 7 in eine am Kopf 9 des Klebeankers 1 umlaufende Nut eingesetzt und weist die Form einer Scheibe (Fig. 6a) oder eines Ringes (Fig. 6b) auf. In Fig. 6c ist die Dichtung 7 mit dem Kopf 9 des Klebeankers 1 verschraubt.

Eine beliebige Kombination von Merkmalen der oben diskutierten Ausführungsbeispiele ist möglich.

Bei allen Ausführungsbeispielen kann eine an sich bekannte Setztiefenmarkierung oder ein Setztiefenanschlag vorgesehen sein.

### Bezugszeichenliste:

- 1: Klebeanker
- 2: Grundkörper
- 3: Einbringöffnung
- 4: Klebemasse
- 5: Austrittsöffnung
- 6: Bohrung
- 7: Dichtung
- 8: erster Kanal
- 9: Kopf des Klebeankers
- 10: Injektor für Klebemasse
- 11: Verbindungskanal
- 12: zweiter Kanal
- 13: Innengewinde
- 14: Kanalsegment
- 15: Außengewinde
- 16: Nut
- 17: Kanal zwischen Austrittsöffnung und Einbringöffnung

## Patentansprüche

1. Klebeanker (1) zum Einsetzen in eine Bohrung (6), mit einem zumindest im Wesentlichen zylindrischen Grundkörper (2) und einem Verbindungsmittel zum Verbinden eines Bauteiles mit dem Klebeanker (1), wobei sich der zylindrische Grundkörper (2) zwischen einem Kopf (9) des Klebeankers (1) und einem dem Kopf (9) entgegengesetzten Ende erstreckt, wobei am oder im Grundkörper (2) wenigstens ein erster Kanal (8) für Klebemasse (4) angeordnet ist, welcher sich ausgehend von dem dem Kopf (9) des Klebeankers (1) entgegengesetzten Ende bis zu einer vorbestimmten axialen Position des Grundkörpers (2) erstreckt und über welchen Klebemasse (4) ausgehend von dem dem Kopf (9) des Klebeankers (1) entgegengesetzten Ende bis zu der vorbestimmten axialen Position in die Bohrung (6) einbringbar ist, und wobei am oder im Grundkörper (2) wenigstens ein zweiter Kanal (12) für Klebemasse (4) angeordnet ist, welcher sich ausgehend von der vorbestimmten axialen Position des Grundkörpers (2) bis zu einem dem Kopf (9) des Klebeankers (1) entgegengesetzten Ende erstreckt und über welchen Klebemasse (4) ausgehend von der vorbestimmten axialen Position bis zu dem dem Kopf (9) des Klebeankers (1) entgegengesetzten Ende ausbringbar ist, wobei vorzugsweise vorgesehen ist, dass sich der wenigstens eine zweite Kanal (12) an den wenigstens einen ersten Kanal (8) anschließt, **dadurch gekennzeichnet, dass** der Grundkörper (2) als Hülse ausgebildet ist und das Verbindungsmittel als Innengewinde (13) der Hülse ausgebildet ist, wobei der wenigstens eine erste Kanal (8) einer Kernlochbohrung des Innengewindes (13) entspricht, und dass am Grundkörper (2) wenigstens eine Einbringöffnung (3) angeordnet ist, über welche eine Klebemasse (4) mit Hilfe eines in die Einbringöffnung (3) eingeführten Injektors (10) einbringbar ist und dass der Grundkörper (2) zumindest eine mit der wenigstens einen Einbringöffnung (3) kommunizierende Austrittsöffnung (5) aufweist, welche den Austritt von in die oder über die Einbringöffnung (3) eingebrachter Klebemasse (4) aus dem Grundkörper (2) in eine den Klebeanker (1) umgebende Bohrung (6) gestattet und dass sich die Einbringöffnung (3) bis zu dem Kopf (9) des Klebeankers (1) erstreckt und axial durch eine Stirnfläche begrenzt ist, welche mit einer Durchtrittsöffnung (11) versehen ist, die mit der Austrittsöffnung (5) kommuniziert, wobei ein Injektor (10) für Klebemasse bis zur Durchtrittsöffnung (11) in die Einbringöffnung (3) einbringbar ist.

2. Klebeanker nach Anspruch 1, **dadurch gekennzeichnet, dass** der wenigstens eine zweite Kanal (12) zumindest abschnittsweise als an einer Mantelfläche des Grundkörpers (2) verlaufende Nut ausgebildet ist bzw. sind.

3. Klebeanker nach einem der Ansprüche 1 oder 2, **dadurch gekennzeichnet, dass** der wenigstens eine zweite Kanal (12) zumindest abschnittsweise wendelförmig in axialer Richtung entlang des Grundkörpers (2) verlaufen, wobei vorzugsweise vorgesehen ist, dass sich die Steigung des Kanals (8, 12) in axialer Richtung des Grundkörpers (2) verändert.

4. Klebeanker nach einem der Ansprüche 1 bis 3, **dadurch gekennzeichnet, dass** der wenigstens eine zweite Kanal (12) zumindest abschnittsweise mäandernd in axialer Richtung entlang des Grundkörpers (2) verlaufen.

5. Klebeanker nach einem der Ansprüche 1 bis 4, **dadurch gekennzeichnet, dass** die Austrittsöffnung (5) mit der wenigstens einen Einbringöffnung (3) über zumindest einen - vorzugsweise im Bereich eines Kopfes (9) des Klebeankers (1) angeordneten - quer zur axialen Erstreckung des Grundkörpers (2) verlaufenden Kanal (17) kommuniziert.

6. Klebeanker nach Ansprüche 5, **dadurch gekennzeichnet, dass** die Durchtrittsöffnung (11) über den quer zur axialen Erstreckung des Grundkörpers (2) verlaufenden Kanal (17) mit der Austrittsöffnung (5) kommuniziert..

7. Klebeanker nach einem der Ansprüche 1 bis 6, **dadurch gekennzeichnet, dass** der Klebeanker (1) wenigstens eine am Grundkörper (2) angeordnete Dichtung (7) aufweist, welche bei einem in eine Bohrung (6) eingesetzten Klebeanker (1) den zwischen dem Grundkörper (2) und einer Wandung der Bohrung (6) verbleibenden Spaltraum in einer Einsetzrichtung des Klebeankers (1) axial verschließt, um die Passage von Klebemasse (7) zumindest im Wesentlichen zu verhindern.

8. Klebeanker nach einem der Ansprüche 1 bis 7, **dadurch gekennzeichnet, dass** der Klebeanker (1) einen Presssitz zum axialen Positionieren des Klebeankers (1) in der Bohrung (6) aufweist, wobei vorzugsweise vorgesehen ist, dass die Dichtung (7) als Presssitz fungiert.

9. Verfahren zum Verankern eines Bauteils in einer Bohrung (6) unter Verwendung eines Klebeankers (1) nach einem der Ansprüche 1 bis 8, mit den Schritten:
- Einsetzen eines Klebeankers (1) nach wenigstens einem der vorangehenden Ansprüche in einer Einsetzrichtung in die Bohrung (6)
- Einbringen von Klebemasse (4), vorzugsweise Zwei-Komponenten-Klebstoff oder Mörtel, in den zwischen der Bohrung (6) und dem Grundkörper (2) verbleibenden Spaltraum.

## Claims

1. An adhesive anchor (1) for insertion into a bore (6) comprising an at least substantially cylindrical main body (2) and a connecting means for connecting a component to the adhesive anchor (1), wherein the cylindrical main body (2) extends between a head (9) of the adhesive anchor (1) and an end opposite to the head (9), wherein arranged on or in the main body (2) is at least one first passage (8) for adhesive (4), which extends from the end opposite to the head (9) of the adhesive anchor (1) to a predetermined axial position of the main body (2) and by way of which adhesive (4) can be introduced into the bore (6) from the end opposite to the head (9) of the adhesive anchor (1) to the predetermined axial position, and wherein arranged on or in the main body (2) is at least one second passage (12) for adhesive (4), which extends from the predetermined axial position of the main body (2) to an end opposite to the head (9) of the adhesive anchor (1) and by way of which adhesive (4) can be discharged starting from the predetermined axial position to the end opposite to the head (9) of the adhesive anchor (1), wherein it is preferably provided that the at least one second passage (12) joins the at least one first passage (8), **characterised in that** the main body (2) is in the form of a sleeve and the connecting means is in the form of a female thread (13) in the sleeve, wherein the at least one first passage (8) corresponds to a core hole bore of the female thread (13) and that arranged on the main body (2) is at least one introduction opening (3), by way of which an adhesive (4) can be introduced by means of an injector (10) inserted into the introduction opening (3) and that the main body (2) has at least one outlet opening (5) which communicates with the at least one introduction opening (3) and which allows the outlet of adhesive (4) introduced into or by way of the introduction opening (3) from the main body into a bore (6) surrounding the adhesive anchor (1) and that the introduction opening (3) extends to the head (9) of the adhesive anchor (1) and is delimited axially by an end face provided with a through opening (11) communicating with the outlet opening (5), wherein an injector (10) for adhesive can be introduced into the introduction opening (3) as far as the through opening (11).

2. An adhesive anchor according to claim 1 **characterised in that** the at least one second passage (12) is or are at least portion-wise in the form of a groove extending at an outside surface of the main body (2).

3. An adhesive anchor according to one of claims 1 or 2 **characterised in that** the at least one second passage (12) extends at least portion-wise helically in an axial direction along the main body (2), wherein it is preferably provided that the slope of the passage (8, 12) varies in the axial direction of the main body (2).

4. An adhesive anchor according to one of claims 1 to 3 **characterised in that** the at least one second passage (12) extends at least portion-wise in a meandering configuration in the axial direction along the main body (2).

5. An adhesive anchor according to one of claims 1 to 4 **characterised in that** the outlet opening (5) communicates with the at least one introduction opening (3) by way of at least one passage (17) which extends transversely relative to the axial extent of the main body (2) and which is preferably arranged in the region of a head (9) of the adhesive anchor (1).

6. An adhesive anchor according to claim 5 **characterised in that** the through opening (11) communicates with the outlet opening (5) by way of the passage (17) which extends transversely relative to the axial extent of the main body (2).

7. An adhesive anchor according to one of claims 1 to 6 **characterised in that** the adhesive anchor (1) has at least one seal (7) which is arranged on the main body (2) and which when an adhesive anchor (1) is inserted into a bore (6) closes the gap space remaining between the main body (2) and a wall of the bore (6) axially in an insertion direction of the adhesive anchor (1) to at least substantially prevent adhesive (4) from passing.

8. An adhesive anchor according to one of claims 1 to 7 **characterised in that** the adhesive anchor (1) has a press fit for axial positioning of the adhesive anchor (1) in the bore (6), wherein it is preferably provided that the seal (7) functions as the press fit.

9. A method of anchoring a component in a bore (6) using an adhesive anchor (1) according to one of claims 1 to 8 comprising the steps:
- inserting an adhesive anchor (1) according to at least one of the preceding claims into the bore (6) in an insertion direction, and
- introducing adhesive (4), preferably two-component adhesive or mortar, into the gap space remaining between the bore (6) and the main body (2).

## Revendications

1. Ancrage adhésif (1) destiné à être inséré dans un alésage (6), avec un corps de base (2) au moins sensiblement cylindrique et un moyen de liaison pour relier un composant à l'ancrage adhésif (1), dans lequel le corps de base (2) cylindrique s'étend entre une tête (9) de l'ancrage adhésif (1) et une extrémité opposée à la tête (9), dans lequel au moins un premier canal (8) pour de la masse adhésive (4) est disposé sur le corps de base (2) ou dans celui-ci, lequel s'étend en partant de l'extrémité opposée à la tête (9) de l'ancrage adhésif (1) jusqu'à une position axiale prédéfinie du corps de base (2) et par l'intermédiaire duquel de la masse adhésive (4) peut être introduite dans l'alésage (6) en partant de l'extrémité opposée à la tête (9) de l'ancrage adhésif (1) jusqu'à la position axiale prédéfinie, et dans lequel est disposé sur le corps de base (2) ou dans celui-ci au moins un deuxième canal (12) pour de la masse adhésive (4), lequel s'étend en partant de la position axiale prédéfinie du corps de base (2) jusqu'à une extrémité opposée à la tête (9) de l'ancrage adhésif (1) et par l'intermédiaire duquel de la masse adhésive (4) peut être distribuée en partant de la position axiale prédéfinie jusqu'à l'extrémité opposée à la tête (9) de l'ancrage adhésif (1), dans lequel il est prévu de préférence que l'au moins un deuxième canal (12) se raccorde à l'au moins un premier canal (8), **caractérisé en ce que** le corps de base (2) est réalisé en tant que douille et le moyen de liaison est réalisé en tant que filetage intérieur (13) de la douille, dans lequel l'au moins un premier canal (8) correspond à un alésage de trou central du filetage intérieur (13), et qu'est disposée sur le corps de base (2) au moins une ouverture d'introduction (3), par l'intermédiaire de laquelle une masse adhésive (4) peut être introduite à l'aide d'un injecteur (10) introduit dans l'ouverture d'introduction (3), et que le corps de base (2) présente au moins une ouverture de sortie (5) communiquant avec l'au moins une ouverture d'introduction (3), laquelle autorise la sortie de masse adhésive (4) introduite dans ou par l'intermédiaire de l'ouverture d'introduction (3) hors du corps de base (2) dans un alésage (6) entourant l'ancrage adhésif (1), et que l'ouverture d'introduction (3) s'étend jusqu'à la tête (9) de l'ancrage adhésif (1) et est délimitée de manière axiale par une face frontale, laquelle est pourvue d'une ouverture de passage (11), qui communique avec l'ouverture de sortie (5), dans lequel un injecteur (10) pour de la masse adhésive peut être introduit dans l'ouverture d'introduction (3) jusqu'à l'ouverture de passage (11).

2. Ancrage adhésif selon la revendication 1, **caractérisé en ce que** l'au moins un deuxième canal (12) est ou sont réalisé(s) au moins par endroits en tant qu'une rainure s'étendant sur une face latérale du corps de base (2).

3. Ancrage adhésif selon l'une quelconque des revendications 1 ou 2, **caractérisé en ce que** l'au moins un deuxième canal (12) s'étend au moins par endroits en forme d'hélice dans une direction axiale le long du corps de base (2), dans lequel il est prévu de manière avantageuse que l'inclinaison du canal (8, 12) varie dans une direction axiale du corps de base (2).

4. Ancrage adhésif selon l'une quelconque des revendications 1 à 3, **caractérisé en ce que** l'au moins un deuxième canal (12) s'étend au moins par endroits de manière sinueuse dans une direction axiale le long du corps de base (2).

5. Ancrage adhésif selon l'une quelconque des revendications 1 à 4, **caractérisé en ce que** l'ouverture de sortie (5) communique avec l'au moins une ouverture d'introduction (3) par l'intermédiaire d'au moins un canal (17) s'étendant de manière transversale à l'extension axiale du corps de base (2) - de préférence disposé dans la zone d'une tête (9) de l'ancrage adhésif (1).

6. Ancrage adhésif selon la revendication 5, **caractérisé en ce que** l'ouverture de passage (11) communique avec l'ouverture de sortie (5) par l'intermédiaire du canal (17) s'étendant de manière transversale à l'extension axiale du corps de base (2).

7. Ancrage adhésif selon l'une quelconque des revendications 1 à 6, **caractérisé en ce que** l'ancrage adhésif (1) présente au moins un joint d'étanchéité (7) disposé sur le corps de base (2), lequel ferme de manière axiale, lorsque l'ancrage adhésif (1) est inséré dans un alésage (6), l'interstice restant entre le corps de base (2) et une paroi de l'alésage (6) dans une direction d'insertion de l'ancrage adhésif (1) pour empêcher au moins sensiblement le passage de la masse adhésive (7).

8. Ancrage adhésif selon l'une quelconque des revendications 1 à 7, **caractérisé en ce que** l'ancrage adhésif (1) présente un ajustement serré pour positionner de manière axiale l'ancrage adhésif (1) dans l'alésage (6), dans lequel il est prévu de préférence que le joint d'étanchéité (7) fait office d'ajustement serré.

9. Procédé pour ancrer un composant dans un alésage (6) en utilisant un ancrage adhésif (1) selon l'une quelconque des revendications 1 à 8, avec les étapes :
- d'insertion d'un ancrage adhésif (1) selon au moins l'une quelconque des revendications précédentes, dans une direction d'insertion dans l'alésage (6),
- d'introduction de matière adhésive (4), de préférence de matière adhésive à deux composants ou de mortier dans l'interstice restant entre l'alésage (6) et le corps de base (2).
